# EUROPEAN PATENT SPECIFICATION

(11) **EP 2 639 874 B1**
(45) Date of publication and mention of the grant of the patent: **23.11.2016**
(21) Application number: 13158568.9
(22) Date of filing: 11.03.2013
(51) Int. Cl.: H01M 8/06, H01M 8/04

(54) **Fuel cell system**
Brennstoffzellensystem
Système de pile à combustible

(30) Priority: 12.03.2012 JP 2012054765
(43) Date of publication of application: 18.09.2013
(73) Proprietor: AISIN SEIKI KABUSHIKI KAISHA, Kariya-shi, Aichi 448-8650 (JP)
(72) Inventor: Kurita, Kenji, Kariya-shi,, Aichi 448-8650 (JP); Ohkawara, Hiroki, Kariya-shi,, Aichi 448-8650 (JP)
(74) Representative: TBK

(56) References cited:
- JP-A- 2002 316 801
- JP-A- 2010 080 278
- US-A1- 2004 048 123
- US-B1- 6 303 243

## Description

### TECHNICAL FIELD

This disclosure generally relates to a fuel cell system.

### BACKGROUND DISCUSSION

A known fuel cell system is disclosed in JP2002-316801A, for example. The fuel cell system disclosed in JP2002-316801A includes a reforming catalyst for generating a reformed gas including hydrogen from a source fuel vapor in which a fuel and water serve as a source material, a fuel cell stuck for generating an electric power by means of the reformed gas and air, and a combustion catalyst for burning an exhaust gas discharged from the fuel cell stack. The fuel cell system including the aforementioned configurations detects a flow rate and a component concentration of the reformed gas flowing to the combustion catalyst. Then, an amount of air supplied to the combustion catalyst is controlled on a basis of the aforementioned detection result so that the temperature of the combustion catalyst turns to be an allowable temperature. A deterioration of the combustion catalyst caused by over temperature may be inhibited accordingly.

According to the fuel cell system disclosed in JP2002-316801A, the deterioration of the combustion catalyst caused by over temperature may be restrained. Nevertheless, whether the combustion catalyst is in a normal state or in an error state is not determined. In addition, the error state of the combustion catalyst is desired to be promptly and securely detected.

A need thus exists for a fuel cell system which promptly and securely detects an error state of a combustion catalyst.

### SUMMARY

According to an aspect of this disclosure, a fuel cell system includes the features defined in claim 1.

In a case where the second combusting portion is in the normal state, the temperature of the second combusting portion increases in a case where a supply volume of the unused combustible gas discharged from the first combusting portion increases. On the other hand, in a case where the second combusting portion is in the error state, the temperature of the second combusting portion does not increase even when the supply volume of the unused combustible gas discharged from the first combusting portion increases because the unused combustible gas is not burnt. That is, in a case where the first combusting portion is not burnt even though the combustible gas and the oxidant gas are supplied to the first combusting portion, the supply volume of the unused combustible gas discharged from the first combusting portion increases as compared to a case where the first combusting portion is burnt. Thus, the temperature of the second combusting portion increases when the second combusting portion is in the normal state while the temperature of the second combusting portion is inhibited from increasing when the second combusting portion is in the error state. Accordingly, the determination of whether the second combusting portion is in the normal state or not may be promptly and securely performed.

During a stop operation of the fuel cell system, the determination portion performs the determination process in a state where the source material is supplied to the first combusting portion at a first predetermined flow rate that is smaller than a flow rate for each of a warm-up operation and a stable operation of the fuel cell system, and the oxidant gas is supplied to the first combusting portion at a second predetermined flow rate that is greater than a flow rate for each of the warm-up operation and the stable operation.

Accordingly, during the stop operation of the fuel cell system, the determination of whether the second combusting portion is normal or not may be performed without an addition of a specific process.

The second combusting portion may include a combustion catalyst burning the combustible gas.

Accordingly, in a case where the temperature of the combustion catalyst falls within an activating temperature range, the temperature of the combustion catalyst is greater as compared to a case where the temperature of the combustion catalyst is below the activating temperature range. The determination of whether the second combusting portion is normal or not may be further accurately performed.

The determination portion may perform the determination process after a temperature of the fuel cell becomes equal to or smaller than a predetermined temperature.

Accordingly, a reignition of the first combusting portion even after extinguishing is securely restrained during the stop operation. The determination of whether the second combusting portion is in the normal state or the error state may be accurately performed without a wrong determination.

During each of a warm-up operation and a stable operation of the fuel cell system, the source material is supplied to the first combusting portion at a first predetermined flow rate that is smaller than a flow rate for each of the warm-up operation and the stable operation of the fuel cell system, and the oxidant gas is supplied to the first combusting portion at a second predetermined flow rate that is greater than a flow rate for each of the warm-up operation and the stable operation in a case where a start command is issued for starting the determination process by the determination portion, and the determination portion may perform the determination process in a state where the source material is supplied to the first combusting portion at the first predetermined flow rate while the oxidant gas is supplied to the first combusting portion at the second predetermined flow rate.

Accordingly, the determination of whether the second combusting portion is in the normal state or the error state may be also performed during the warm-up operation or the stable operation.

The determination portion may perform the determination process after an elapse of a first predetermined time from a start of a supply of each of the source material at the first predetermined flow rate and the oxidant gas at the second predetermined flow rate to the first combusting portion.

Accordingly, the reignition of the first combusting portion even after extinguishing is securely restrained during the warm-up operation or the stable operation. The determination of whether the second combusting portion is in the normal state or the error state may be accurately performed without a wrong determination.

The determination portion may perform the determination process after a temperature of the fuel cell becomes equal to or smaller than a predetermined temperature.

Accordingly, the reignition of the first combusting portion even after extinguishing is securely restrained during the warm-up operation or the stable operation. The determination of whether the second combusting portion is in the normal state or the error state may be accurately performed without a wrong determination.

The fuel cell system may further include a blow-off determination portion determining whether or not the combustion of the first combusting portion is extinguished on a basis of a temperature of the first combusting portion, wherein in a case where the blow-off determination portion determines an occurrence of the extinction of combustion of the first combusting portion, the determination portion performs the determination process based on the temperature change of the second combusting portion during a second predetermined time before the determination of the extinction of combustion of the first combusting portion by the blow-off determination portion.

Accordingly, even when the extinction of combustion of the first combusting portion occurs, the determination of whether the second combusting portion is in the normal state or the error state may be promptly performed without spending time after the extinction of combustion of the first combusting portion.

The determination portion may perform the determination process in a case where a temperature of the reforming portion is equal to or greater than a reforming reaction activating temperature.

In a case where the temperature of the reforming portion is equal to or greater than the reforming reaction activating temperature, a great amount of hydrogen is generated from the source material. Thus, hydrogen content in gas (fuel, i.e., hydrogen-rich gas) supplied to the fuel cell and further to the second combusting portion increases. Because hydrogen includes better ignitability and combustibility than the source material, steady burning of hydrogen at the second combusting portion may lead to the accurate determination of whether or not the second combusting portion is normal.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a fuel cell system according to an embodiment disclosed here;
Fig. 2 is a block diagram of the fuel cell system illustrated in Fig. 1;
Fig. 3 is a flowchart of a control program performed by a control device illustrated in Fig. 2 for determining an error state of a second combusting portion during a stop operation;
Fig. 4 is a flowchart of the control program performed by the control device for determining the error state of the second combusting portion during the stop operation according to a modified example;
Fig. 5 is a flowchart of the control program performed by the control device for determining the error state of the second combusting portion forcedly executed during a warm-up operation or a stable operation;
Fig. 6 is a flowchart of the control program performed by the control device for determining the error state of the second combusting portion forcedly executed during the warm-up operation or the stable operation according to a modified example; and
Fig. 7 is a flowchart of the control program performed by the control device for determining the error state of the second combusting portion executed when a blow-off of a first combusting portion occurs during the warm-up operation or the stable operation.

### DETAILED DESCRIPTION

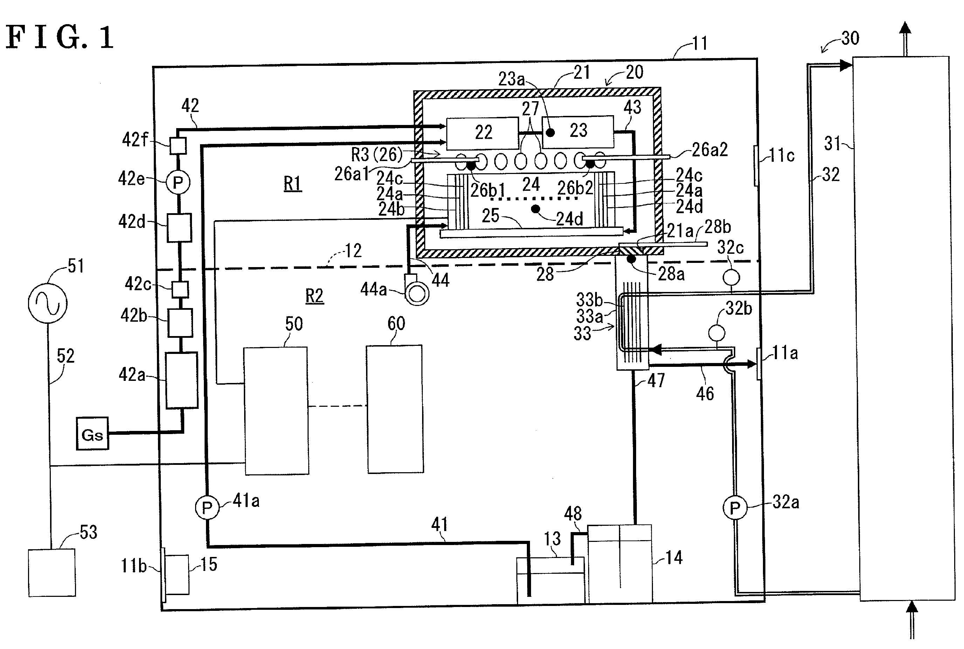

An embodiment will be explained with reference to the attached drawings. As illustrated in Fig. 1, a fuel cell system of the embodiment includes a case 11 substantially having a box shape, a fuel cell module 20, an exhaust heat recovery system 30, an inverter device 50, and a control device 60.

The case 11 includes a partition member 12 dividing an inside of the case 11 into a first chamber R1 serving as a first void and a second chamber R2 serving as a second void. The partition member 12 is a member dividing or separating the inside of the case 11 in a vertical direction (in an up-and-down direction). The first chamber R1 and the second chamber R2 are in communication with each other.

The fuel cell module 20 is accommodated within the first chamber R1 while having a distance (or a void) from an inner wall surface of the first chamber R1. The fuel cell module 20 at least includes a casing 21 and a fuel cell 24. According to the present embodiment, the fuel cell module 20 includes the casing 21, an evaporating portion 22, a reforming portion 23, and the fuel cell 24.

The casing 21 made of an insulative material is substantially formed into a box shape. The casing 21 is provided at the partition member 12 via a support structure within the first chamber R1 while having the distance from the inner wall surface of the first chamber R1. The evaporating portion 22, the reforming portion 23, the fuel cell 24, and a combustion void R3 serving as a first combusting portion 26 are arranged within the casing 21 in a state where the evaporating portion 22 and the reforming portion 23 are positioned at an upper side of the fuel cell 24.

The evaporating portion 22, which is heated by a combustion gas, evaporates water (i.e., water for reforming) supplied to the evaporating portion 22 so as to generate water vapor and preheats a source material (fuel) supplied to the evaporating portion 22. The evaporating portion 22 mixes the water vapor generated in the aforementioned manner and the source material that is preheated so as to supply the mixture to the reforming portion 23. The source material corresponds to a gaseous fuel such as natural gas and LPG, for example, and a liquid fuel such as kerosene, gasoline, and methanol, for example. According to the present embodiment, the natural gas is used as the source material.

A first end of a water supply pipe 41 is connected to the evaporating portion 22. A second end (a lower end) of the water supply pipe 41 is connected to a water tank 13 so that the second end is positioned within the water tank 13. A water pump 41 a is provided at the water supply pipe 41. The water pump 41 a supplies water to the evaporating portion 22 and controls or adjusts a volume of water (i.e., a flow rate of water per unit time) supplied to the evaporating portion 22.

The source material is supplied to the evaporating portion 22 via a fuel supply pipe 42 from a supply source for source material (which will be hereinafter simply referred to as a supply source) Gs. The supply source Gs corresponds to a city gas supply line or an LP gas cylinder, for example. A shutoff valve 42a, a desulfurizer 42b, a flow sensor 42c, a buffer tank 42d, a fuel pump 42e, and a check valve 42f are provided in the mentioned order at the fuel supply pipe 42 from an upstream side in view of a flow direction of the source material. The shutoff valve 42a, the desulfurizer 42b, the flow sensor 42c, the buffer tank 42d, the fuel pump 42e, and the check valve 42f are accommodated within the case 11.

The shutoff valve 42a is a double valve for selectively opening and closing the fuel supply pipe 42 by means of a command from the control device 60. The desulfurizer 42b removes sulfur content, for example, sulfur compound, in the source material. The flow sensor 42c detects a flow rate of the source material (per unit time) supplied to the fuel cell 24 and transmits a detection result of the flow sensor 42c to the control device 60. The buffer tank 42d restrains a decrease of detection accuracy of the flow sensor 42c or a deviation of a detection value of the flow sensor 42c from a true value caused by a pulsation of the fuel pump 42e. The fuel pump 42e is a supply device supplying the source material to the fuel cell 24 and controls a fuel supply volume, i.e., a fuel flow rate per unit time, from the supply source Gs based on a control command from the control device 60. The fuel pump 42e is a pumping device to suction the source material that is then pumped to the reforming portion 23. The check valve 42f is arranged between the fuel pump 42e and the fuel cell module 20, specifically, the evaporating portion 22. The check valve 42f allows a flow of the source material from the fuel pump 42e to the fuel cell module 20 but prohibits the flow from the fuel cell module 20 to the fuel pump 42e.

The reforming portion 23 is heated by the combustion gas so as to receive heat necessary for a water vapor reforming reaction. As a result, the reforming portion 23 generates a reformed gas from a mixed gas (source material and water vapor) supplied from the evaporating portion 22. Specifically, the inside of the reforming portion 23 is filled with a catalyst, for example, ruthenium catalyst (Ru catalyst) and nickel catalyst (Ni catalyst). The mixed gas supplied from the evaporating portion 22 reacts by means of the catalyst so as to be reformed, thereby generating hydrogen gas and carbon monoxide gas (water vapor reforming reaction). At the same time, carbon monoxide generated during the water vapor reforming reaction and water vapor react so as to be converted to hydrogen gas and carbon dioxide, i.e., a carbon monoxide shift reaction occurs. The thus generated gas (reformed gas) is supplied to a fuel electrode of the fuel cell 24. The reformed gas includes hydrogen, carbon monoxide, carbon dioxide, water vapor, natural gas (methane gas) that is not reformed, and water (water vapor) not used for reforming. Accordingly, the reforming portion 23 generates the reformed gas serving as a fuel from the source material and water to supply the reformed gas to the fuel cell 24. The water vapor reforming reaction is an endothermic reaction while the carbon monoxide shift reaction is an exothermic reaction.

The reforming portion 23 includes a temperature sensor 23a serving as a reforming portion inlet temperature sensor to detect a temperature of a portion at which the source material and water (water vapor) flow in, i.e., a reforming portion inlet temperature T3. The temperature sensor 23a is provided at the portion at which the source material and water (water vapor) flow in. The temperature sensor 23a transmits a detection result to the control device 60. The reforming portion 23 may include a temperature sensor serving as a reforming portion outlet temperature sensor for detecting a temperature of a portion at which the reformed gas flows out. The reforming portion outlet temperature sensor is provided at the portion at which the reformed gas of the reforming portion 23 flows out. The reforming portion outlet temperature sensor may transmit a detection result to the control device 60.

The fuel cell 24 includes a lamination of plural cells 24a each having a fuel electrode, an air electrode (an oxidant electrode), and an electrolyte disposed between the fuel electrode and the air electrode. The fuel cell 24 according to the present embodiment is a solid oxide fuel cell (SOFC) where zirconium oxide serving as a solid oxide is used as the electrolyte. The fuel electrode of the fuel cell 24 is supplied with hydrogen, carbon monoxide, and methane gas, for example, as fuel. An operating temperature of the fuel cell 24 is substantially in a range from 400 degrees C to 1,000 degrees C. Not only hydrogen is used as the fuel but also natural gas or coal gas may be directly used as the fuel. When the natural gas or the coal gas is directly used as the fuel, the reforming portion 23 may be omitted.

A fuel flow passage 24b through which the reformed gas serving as the fuel flows is formed at the fuel electrode of each of the cells 24a. An air flow passage 24c through which air (cathode air) serving as oxidant gas flows is formed at the air electrode of each of the cells 24a.

The fuel cell 24 includes a temperature sensor 24d serving as a fuel cell temperature sensor and detecting a temperature of the fuel cell 24, i.e., a fuel cell temperature T5. The temperature sensor 24d is substantially positioned at a center in the lamination direction of the cells 24a of the fuel cell 24 and at a center in a vertical direction in Fig. 1. The temperature sensor 24d transmits a detection result to the control device 60.

The fuel cell 24 is placed on a manifold 25. The reformed gas is supplied from the reforming portion 23 to the manifold 25 via a reformed gas supply pipe 43. A lower end (a first end) of the fuel flow passage 24b is connected to a fuel lead-out port formed at the manifold 25. The reformed gas led out from the fuel lead-out port of the manifold 25 is introduced from the lower end of the fuel flow passage 24b and is discharged from an upper end of the fuel flow passage 24b. The cathode air sent from a cathode air blower 44a serving as a cathode air sending device flows through a cathode air supply pipe 44 so as to be supplied from a lower end of the air flow passage 24c and be discharged from an upper end of the air flow passage 24c.

The cathode air blower 44a is arranged within the second chamber R2. The cathode air blower 44a suctions air within the second chamber R2 and discharges the air to the air electrode of the fuel cell 24. A discharge volume of air by the cathode air blower 44a is controlled on a basis of a conditioned control (for example, a load electric power (power consumption) of the fuel cell 24).

In the fuel cell 24, the fuel supplied to the fuel electrode and the oxidant gas supplied to the air electrode achieve a power generation. Reactions indicated by a chemical formula (1) and a chemical formula (2) as below occur at the fuel electrode while a reaction indicated by a chemical formula (3) as below occurs at the air electrode. That is, oxide ion (O²⁻) generated at the air electrode penetrates through the electrolyte so as to react with hydrogen at the fuel electrode, thereby generating an electric energy. As a result, the reformed gas and the oxidant gas (air) that have not been used in the power generation are discharged from the fuel flow passage 24b and the air flow passage 24c respectively.

(1) H₂ + O²⁻ → H₂O + 2e⁻

(2) CO + O²⁻ → CO₂ + 2e⁻

(3) 1/2O₂ + 2e⁻ → O²⁻

The reformed gas (anode-off gas) that has not been used in the power generation is discharged from the fuel flow passage 24b and is burnt at the combustion void R3 formed between the fuel cell 24 and the evaporating portion 22 (the reforming portion 23) by means of the oxidant gas (cathode-off gas) that has not been used in the power generation. The resulting combustion gas (flames 27) heats the evaporating portion 22 and the reforming portion 23, and further brings the inside of the fuel cell module 20 to be maintained at an operating temperature. Afterwards, the combustion gas is discharged to the outside of the fuel cell module 20 from an exhaust opening 21 a. Accordingly, the aforementioned combustion void R3 constitutes the first combusting portion 26 heating the reforming portion 23 by burning the anode-off gas and the cathode-off gas from the fuel cell 24. The first combusting portion 26 receives a combustible gas including an unused fuel not used for generating an electric power from the fuel cell 24 to burn the combustible gas by the oxidant gas and sends out the resulting combustion gas.

The anode-off gas is burnt to generate the flames 27 at the first combusting portion 26 (the combustion void R3). First and second ignition heaters 26a1 and 26a2 are provided at the first combusting portion 26 so as to ignite the anode-off gas. In addition, a pair of temperature sensors 26b1 and 26b2 are provided at the first combusting portion 26 so as to detect the temperature of the first combusting portion 26. A detection result (an output signal) of each of the temperature sensors 26b1 and 26b2 is transmitted to the control device 60.

The exhaust heat recovery system 30 performs a heat exchange between an exhaust heat of the fuel cell 24 and a storage water so that the exhaust heat is recovered and stored in the storage water. The exhaust heat recovery system 30 includes a hot water storage tank 31 storing water (storage water, hot water), a water circulation line 32 where the water is circulated, and a heat exchanger 33 where the heat exchange is performed between an exhaust combustion gas from the fuel cell module 20 and the water.

The hot water storage tank 31 includes a single column-shaped container in which the water is stored in such a manner that a temperature at an upper portion of the water in the container is the highest, is gradually decreasing towards a lower portion of the water, and is the lowest at the lower portion of the water in the container. Water, i.e., tap water (at relatively a low temperature), for example, is supplied to a lower portion of the column-shaped container of the hot water storage tank 31. The water (hot water) at a relatively high temperature stored in the hot water storage tank 31 is discharged from an upper portion of the container of the hot water storage tank 31.

A first end of the water circulation line 32 is connected to the lower portion of the hot water storage tank 31 while a second end of the water circulation line 32 is connected to the upper portion of the hot water storage tank 31. A water circulation pump 32a serving as water circulation means, a first temperature sensor 32b, the heat exchanger 33, and a second temperature sensor 32c are provided in the mentioned order at the water circulation line 32 from the first end towards the second end thereof. The water circulation pump 32a suctions the water (the storage water) at the lower portion of the hot water storage tank 31 so that the water flows in an arrow direction in Fig. 1 through the water circulation line 32 to be discharged and supplied to the upper portion of the hot water storage tank 31. A flow rate (a sending amount) of the water flowing through the water circulation line 32 is controlled by the water circulation pump 32a. The sending amount of the water by the water circulation pump 32a is controlled so that a detection temperature by the second temperature sensor 32c (i.e., a temperature of the water at an entry side of the hot water storage tank 31) turns to be a predetermined temperature or falls within a predetermined temperature range.

The first temperature sensor 32b is provided at a portion of the water circulation line 32 where the storage water flows towards the heat exchanger 33, i.e., provided between the heat exchanger 33 and the hot water storage tank 31. The first temperature sensor 32b detects the temperature of the water at an entry side of the heat exchanger 33 (heat exchanger inlet temperature), i.e., the temperature of the water at an exit side of the hot water storage tank 31. The first temperature sensor 32b transmits a detection result to the control device 60.

The second temperature sensor 32c is provided at a portion of the water circulation line 32 where the storage water flows from the heat exchanger 33. The second temperature sensor 32c detects the temperature of the water at an exit side of the heat exchanger 33, i.e., the temperature of the water at the entry side of the hot water storage tank 31 (hot water storage tank inlet temperature). The second temperature sensor 32c transmits a detection result to the control device 60.

The heat exchanger 33 is supplied with the exhaust combustion gas from the fuel cell module 20 and the storage water from the hot water storage tank 31 so as to perform the heat exchange between the exhaust combustion gas and the storage water. The heat exchanger 33 is arranged within the case 11. According to the present embodiment, the heat exchanger 33 is provided at a lower side of the fuel cell module 20. At least a lower portion of the heat exchanger 33 penetrates through the partition member 12 and projects to the second chamber R2.

The heat exchanger 33 includes a casing 33a. An upper portion of the casing 33a is connected to the exhaust opening 21 a provided at a lower portion of the casing 21 of the fuel cell module 20 so that the exhaust combustion gas is discharged from the exhaust opening 21 a. An exhaust pipe 46 is connected to a lower portion of the casing 33a. The exhaust pipe 46 is connected to an exhaust port 11 a. A condensed water supply pipe 47 connected to a deionizer 14 is connected to a bottom portion of the casing 33a. A heat exchanging portion 33b serving as a condensation portion connected to the water circulation line 32 is provided within the casing 33a.

According to the heat exchanger 33 having the aforementioned configuration, the exhaust combustion gas from the fuel cell module 20 flows into the casing 33a through the exhaust opening 21 a. In a case where the exhaust combustion gas flows through the heat exchanging portion 33b where the storage water flows, the heat exchange is performed between the exhaust combustion gas and the storage water, thereby causing the exhaust combustion gas to be condensed and cooled. The exhaust combustion gas after condensation flows through the exhaust pipe 46 to be discharged to the outside of the case 11 via the exhaust port 11 a. Condensed water resulting from the aforementioned heat exchange flows through the condensed water supply pipe 47 so as to be supplied to the deionizer 14 (i.e., the condensed water drops by its own weight). On the other hand, the storage water flowing to the heat exchanging portion 33b is heated so as to flow out towards the upper portion of the hot water storage tank 31.

A second combusting portion 28 is provided at an exhaust combustion gas flow-in portion of the heat exchanger 33, i.e., at the exhaust opening 21 a of the casing 21. The second combusting portion 28 receives or bringing in a first combusting portion off-gas, i.e., an unused combustible gas discharged from the first combusting portion 26, for example, hydrogen, methane gas, or carbon monoxide, which is then burnt to flow out from the second combusting portion 28. The second combusting portion 28 is constituted by a combustion catalyst serving as a catalyst for burning the combustible gas. The combustion catalyst is obtained by noble metal, for example, platinum or palladium, deposited on a ceramic carrier. Such platinum or palladium may be deposited on a pellet-type ceramic carrier or deposited on a honeycomb ceramic/metal or form metal.

The combustion catalyst burns the combustible gas, i.e., hydrogen, methane gas, or carbon monoxide, for example, by catalytic combustion instead of flaming combustion. Thus, a combustion speed is high, which may result in combustion of a great amount of combustible gas. In addition, a combustion efficiency is high, which may restrain a discharge of unburnt gas. According to the catalytic combustion, the order of ease of ignition is hydrogen, carbon monoxide, and methane gas.

The second combusting portion 28 includes a combustion catalytic heater 28a for heating the combustion catalyst to an activating temperature of the catalyst to burn the combustible gas. The combustion catalytic heater 28a is heated by a command of the control device 60. The second combusting portion 28 also includes a temperature sensor 28b for detecting a temperature T1 of the second combusting portion 28. A detection result (an output signal) of the temperature sensor 28b is transmitted to the control device 60. Instead of the temperature sensor 28b, a temperature sensor for detecting a temperature of the exhaust combustion gas discharged from the second combusting portion 28 may be provided at an immediately downstream of the second combusting portion 28.

The fuel cell system of the present embodiment also includes the water tank 13 and the deionizer 14. The water tank 13 and the deionizer 14 are arranged within the second chamber R2. The water tank 13 stores pure water supplied from the deionizer 14. A water volume sensor (a water level sensor) is provided at the water tank 13 so as to detect a pure water volume in the water tank 13. The water volume sensor is a float-type or a capacitive-type water level indicator, for example. The water volume sensor transmits a detection signal to the control device 60.

The deionizer 14 incorporates activated carbon and ion-exchange resin. For example, the deionizer 14 is filled with the flaky activated carbon and the granular ion-exchange resin. In addition, depending on a state of treatment-object water, a hollow fiber filter may be provided at the deionizer 14. The deionizer 14 brings the condensed water from the heat exchanger 33 to be pure water by means of the activated carbon and the ion-exchange resin. The deionizer 14 is connected to the water tank 13 via a pipe 48. The pure water in the deionizer 14 is supplied to the water tank 13 by flowing through the pipe 48.

The fuel cell system includes an air inlet port 11 b formed at the case 11 forming the second chamber R2, an air outlet port 11 c formed at the case 11 forming the first chamber R1, and a ventilation air blower 15 provided at the air inlet port 11 b. The ventilation air blower 15 is a ventilator for ventilating the case 11. In a case where the ventilation air blower 15 is operated, an outside air is suctioned to the ventilation air blower 15 via the air inlet port 11 b and is sent to the second chamber R2. Further, gas (mainly air) within the second chamber R2 flows to the first chamber R1 by passing through the partition member 12. Gas within the first chamber R1 is discharged to the outside of the case 11 via the air outlet port 11c.

The fuel cell system also includes the inverter device 50. The inverter device 50 includes a first function for receiving a DC (direct-current) voltage output from the fuel cell 24 and converting the DC voltage into a predetermined AC (alternating-current) voltage so as to output the AC voltage to a power line 52 connected to an alternating system power supply 51 (i.e., a commercial power supply) (hereinafter simply referred to as a system power supply 51) and an external electric power load 53 (hereinafter simply referred to as an electric power load 53). The inverter device 50 also includes a second function for receiving an AC voltage from the system power supply 51 via the power line 52 and converting the AC voltage into a predetermined DC voltage so as to output the DC voltage to an auxiliary machinery and/or the control device 60.

The system power supply 51 supplies an electric power to the electric power load 53 via the power line 52 connected to the system power supply 51. The fuel cell 24 is connected to the power line 52 via the inverter device 50. The electric power load 53 is a load driven by an AC power source, i.e., an electrical appliance such as a hair drier, a refrigerator, and a television, for example.

The auxiliary machinery includes the motor-driven pumps 41 a and 42e (the water pump 41 a and the fuel pump 42e), the ventilation air blower 15, and the cathode air blower 44a for supplying the source material, water, and air to the fuel cell module 20, for example. The auxiliary machinery is driven by the DC voltage.

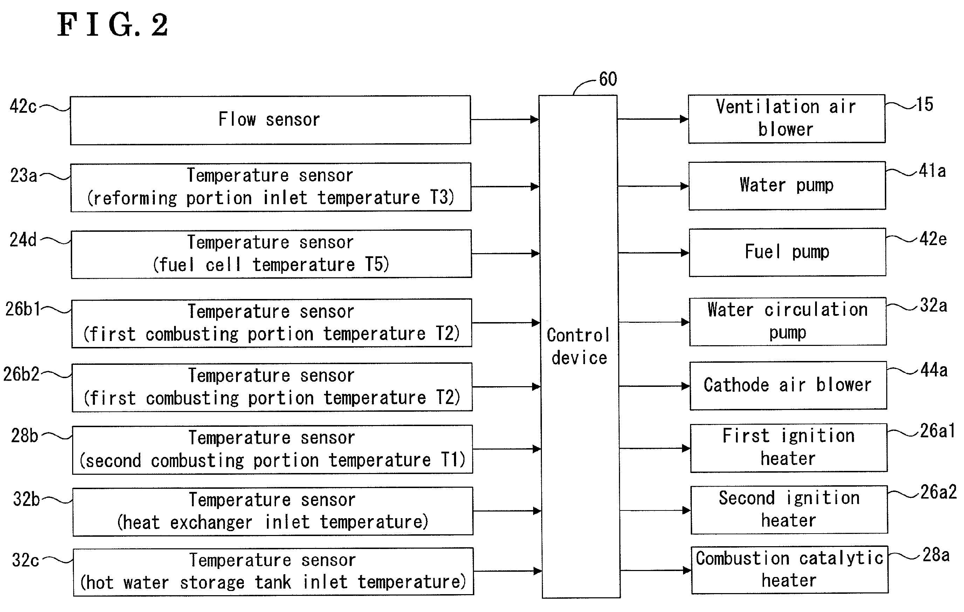

Further, the fuel cell system includes the control device 60. As illustrated in Fig. 2, the aforementioned temperature sensors 23a, 24d 26b1, 26b2, 28b, 32b, 32c, the flow sensor 42c, the pumps 32a, 41 a, 42e, the blowers 15, 44a, and the ignition heaters 26a1, 26a2, 28a are connected to the control device 60. The control device 60 includes a microcomputer having an input-output interface (I/O interface), a CPU, a RAM, and a ROM all of which are connected to one another via a bus. The CPU has a function to operate the fuel cell system. The RAM temporarily stores a variable necessary to perform a program for the operation of the fuel cell system. The ROM stores such program.

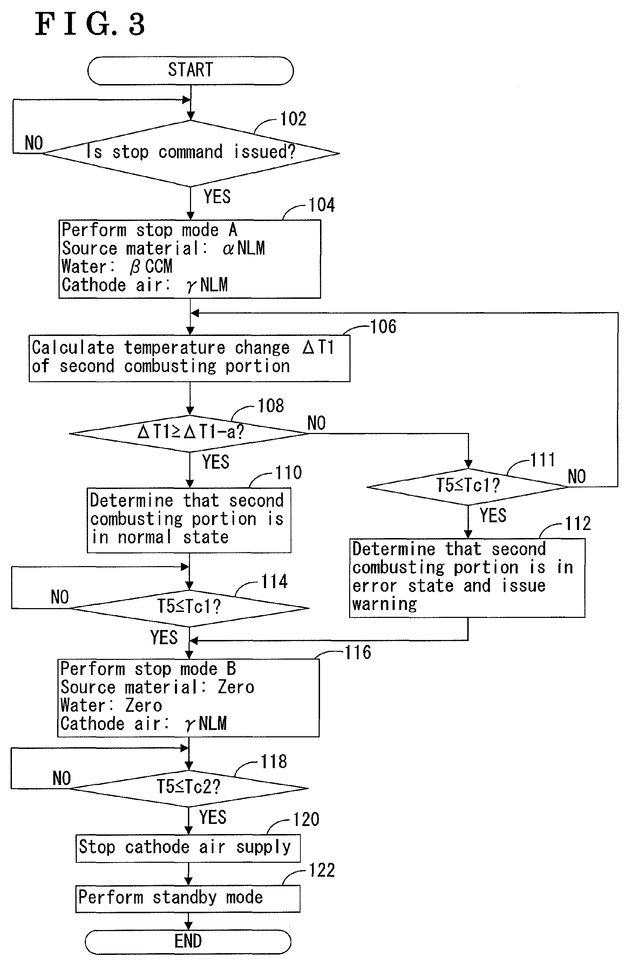

Next, an operation of the fuel cell system including the aforementioned configurations will be explained. First, a case where a stop operation of the fuel cell system is started while the fuel cell system performs a warm-up operation or a stable operation will be explained. In a case where a start switch is turned on or the fuel cell system is automatically started at a start time that is set by a user beforehand, a program (a control program) corresponding to a flowchart in Fig. 3 is executed.

In step 102, it is determined whether or not a stop command is issued. The stop command may be automatically issued at a stop time that is set by the user beforehand or when the user presses an emergency stop switch, for example. In a case where the stop command is issued, the control device 60 determines YES in step 102 to proceed the program to step 104 to start the stop operation of the fuel cell system.

In step 104, the control device 60 performs a stop mode A. The stop operation includes the stop mode A and a stop mode B. In the stop mode A, the supply volume of source material decreases while the supply volume of cathode air increases to stop the combustion of the first combusting portion 26. In the stop mode A, the source material is supplied to the first combusting portion 26 at a first predetermined flow rate (according to the present embodiment, a first predetermined flow rate αNLM) which is smaller than a flow rate for the warm-up operation or the stable operation. In addition, in the stop mode A, the cathode air is supplied to the first combusting portion 26 at a second predetermined flow rate (according to the present embodiment, a second predetermined flow rate γNLM) which is greater than a flow rate for the warm-up operation or the stable operation. The source material is supplied to maintain the fuel cell 24 in a reducing condition at a high temperature to thereby restrain the fuel cell 24 from oxidizing. That is, at this time, the combustion of the fuel cell 24 is not targeted. Thus, the first predetermined flow rate is specified so as to meet the aforementioned requirement, i.e., maintaining the fuel cell 24 in a reducing condition. The second predetermined flow rate for the cathode air is specified so that the source material is sufficiently diluted and discharged. Further, water is supplied at a supply volume of βCCM. Here, "NLM" is normal liters per minute while "CCM" is cubic centimeters per minute.

The control device 60 controls the fuel pump 42e so that the source material is supplied at the first predetermined flow rate, controls the cathode air blower 44a so that the cathode air is supplied at the second predetermined flow rate, and controls the water pump 41 a so that the water is supplied at βCCM.

In step 106, the control device 60 calculates a temperature change of the second combusting portion 28 per unit time, i.e., a temperature change ΔT1, in the stop mode A. For example, the control device 60 measures the temperature T1 of the second combusting portion 28, i.e., the temperature of the exhaust gas from the second combusting portion 28, by the temperature sensor 28b per predetermined time. Then, the control device 60 divides a difference between the temperatures presently measured and previously measured by the aforementioned predetermined time so as to calculate the temperature change ΔT1. Alternatively, not only data of the present temperature and the previous temperature, the control device 60 may store data of plural temperatures to calculate the temperature change ΔT1 by using the data of plural temperatures over a long time period. Further alternatively, the control device 60 may detect the temperature change for a short time period, for example, a few seconds to minutes, per predetermined period. Then, the control device 60 may calculate the temperature change ΔT1 detected within a predetermined time or within a time period in which a predetermined condition is satisfied.

In a case where the temperature change ΔT1 of the second combusting portion 28 that is detected in step 106 becomes equal to or greater than a predetermined value ΔT1-a in step 108, the control device 60 determines that the second combusting portion 28 is in a normal state in step 110. On the other hand, for example, in a case where a state in which the temperature change ΔT1 is smaller than the predetermined value ΔT1-a still continues even when the fuel cell temperature T5 becomes equal to or smaller than a first predetermined temperature Tc1 (in step 111), i.e., the temperature change ΔT1 equal to or greater than the predetermined value ΔT1-a is not detected, the control device 60 determines that the second combusting portion 28 is in an error state in step 112. Step 108 to step 112 serve as a determination portion. The error state of the second combusting portion 28 includes breakage and deactivation of the combustion catalyst, for example.

Specifically, in step 108, the control device 60 determines whether or not the temperature change ΔT1 of the second combusting portion 28 is equal to or greater than the predetermined value ΔT1-a. The control device 60 determines YES when the temperature change ΔT1 is equal to or greater than the predetermined value ΔT1-a and proceeds the program to step 110. Accordingly, the control device 60 determines that the second combusting portion 28 is in the normal state in step 110 at a time when the temperature change ΔT1 of the second combusting portion 28 becomes equal to or greater than the predetermined value ΔT1-a before the fuel cell temperature T5 becomes equal to or smaller than the first predetermined temperature Tc1. The control device 60 proceeds the program to step 116 after the fuel cell temperature T5 becomes equal to or smaller than the first predetermined temperature Tc1 in step 114.

On the other hand, in a case where the temperature change ΔT1 is smaller than the predetermined value ΔT1-a, the control device 60 determines NO in step 108 to proceeds the program to step 111. In step 111, it is determined whether the fuel cell temperature T5 is equal to or smaller than the first predetermined temperature Tc1. The control device 60 repeats procedures in step 106, step 108, and step 111 until the fuel cell temperature T5 becomes equal to or smaller than the first predetermined temperature Tc1, i.e., in a state where the fuel cell temperature T5 is greater than the first predetermined temperature Tc1. In a case where a state in which the temperature change ΔT1 is smaller than the predetermined value ΔT1-a continues even when the fuel cell temperature T5 becomes equal to or smaller than the first predetermined temperature Tc1, the control device 60 determines NO in step 108 and YES in step 111 so as to proceed the program to step 112. In step 112, the control device 60 determines the error state (malfunction) of the second combusting portion 28 and issues a warning about the error state, i.e., alerts a user to the error state, by display or sound, for example.

The predetermined value ΔT1-a may be 0°C (zero degrees C), for example. In a case where the second combusting portion 28 is burnt by the combustion catalyst and thus the temperature change ΔT1 increases, it is determined that the second combusting portion 28 is in the normal state. In a case where the temperature change ΔT1 does not increase, it is determined that the second combusting portion 28 is in the error state. At this time, in order to inhibit a wrong determination that the increase of the combustion catalyst temperature is normal even though such temperature increase is caused by an increase of inflow of the combustible gas to the second combusting portion 28 for a moment, regardless of the state of the combustion catalyst, when the power generation is stopped at the fuel cell 24 immediately after the initiation of the stop mode A, the predetermined value ΔT1-a may be greater than 0°C, for example, 5-10°C. In addition, the first predetermined temperature Tc1 is specified to be lower than a temperature at which the first combusting portion 26 is inhibited from being naturally ignited, i.e., to be lower than a third predetermined temperature Tc3 serving as a predetermined temperature which will be explained later. The first predetermined temperature Tc1 is specified to restrain oxidation within the fuel cell 24.

The second combusting portion 28 is determined to be normal in a case where the temperature change ΔT1 is equal to or greater than the predetermined value ΔT1-a, and is determined to be abnormal in a caser where the temperature change ΔT1 is smaller than the predetermined value ΔT1-a because of the following reasons. In a state where the second combusting portion 28 is in the normal state, the temperature thereof increases when the supply volume of unused combustible gas discharged from the first combusting portion 26 increases. On the other hand, in a state where the second combusting portion 28 is in the error state, the temperature thereof is inhibited from increasing because, even when the supply volume of unused combustible gas discharged from the first combusting portion 26 increases, the unused combustible gas is not burnt at the second combusting portion 28. Because the supply volume of cathode air increases, the second combusting portion 28 is cooled so that the temperature thereof decreases. That is, in a case where the first combusting portion 26 is not burnt even though the first combusting portion 26 is provided with the combustible gas and the oxidant gas, the supply of unused combustible gas discharged from the first combusting portion 26 to the second combusting portion 28 increases as compared to a case where the first combusting portion 26 is burnt. This is because the combustible gas supplied to the first combusting portion 26 is directly supplied to the second combusting portion 28. Accordingly, in a case where the second combusting portion 28 is in the normal state, the temperature thereof increases while the temperature thereof is inhibited from increasing in a case where the second combusting portion 28 is in the error state.

The control device 60 performs the stop mode B in step 116. In the stop mode B, the supply of source material and water is stopped while the cathode air is supplied at the second predetermined flow rate γNLM in the same way as in the stop mode A. The control device 60 controls the fuel pump 42e and the water pump 41 a to stop operating and controls the cathode air blower 44a to supply the cathode air at the second predetermined flow rate γNLM.

The control device 60 determines NO in step 118 in a case where the fuel cell temperature T5 is greater than a second predetermined temperature Tc2 that is smaller than the first predetermined temperature Tc1 to repeat the procedure in step 118. In a case where the fuel cell temperature T5 is equal to or smaller than the second predetermined temperature Tc2, the control device 60 determines YES in step 118 to proceed the program to step 120.

The control device 60 controls the cathode air blower 44a to stop in step 120 so that the supply of the cathode air is stopped. Then, the control device 60 performs a standby mode in step 122. In the standby mode, the fuel cell system is maintained to be stopped until the warm-up operation is started after the completion of the stop operation so as to wait a command for starting the operation of the fuel cell system.

In a state where the second combusting portion 28 is in the normal state, the temperature thereof increases when the supply volume of unused combustible gas discharged from the first combusting portion 26 increases. On the other hand, in a state where the second combusting portion 28 is in the error state, the temperature thereof is inhibited from increasing even when the supply volume of unused combustible gas discharged from the first combusting portion 26 increases because the unused combustible gas does not burn at the second combusting portion 28. That is, in a case where the first combusting portion 26 is not burnt even though the first combusting portion 26 is provided with the combustible gas and the oxidant gas, the supply of unused combustible gas discharged from the first combusting portion 26 to the second combusting portion 28 increases as compared to a case where the first combusting portion 26 is burnt. Thus, in a state where the second combusting portion 28 is in the normal state, the temperature thereof increases but the temperature thereof is inhibited from increasing in a state where the second combusting portion 28 is in the error state. According to the fuel cell system of the present embodiment, the determination portion (step 108 to step 112) determines that the second combusting portion 28 is in the normal state when the temperature change ΔT1 of the second combusting portion 28 becomes equal to or greater than the predetermined value ΔT1-a in a state where the first combusting portion 26 is inhibited from being burnt while being provided with the combustible gas and the oxidant gas. Otherwise the determination portion (step 108 to step 112) determines that the second combusting portion 28 is in the error state. As a result, whether the second combusting portion 28 is in the normal state or the error state may be promptly and securely determined.

In addition, the second combusting portion 28 is constituted by the combustion catalyst that burns the combustible gas. Thus, in a case where the temperature of the combustion catalyst falls within an activating temperature range, the temperature of the combustion catalyst is greater as compared to a case where the temperature of the combustion catalyst is below the activating temperature range. The determination of whether the second combusting portion 28 is normal or not (i.e., the determination of the second combusting portion 28) may be further accurately performed.

During the stop operation of the fuel cell system, the determination portion (step 108 to step 112) performs the aforementioned determination process (i.e., determines whether the second combusting portion 28 is in the normal state or the error state) in a state where the source material is supplied to the first combusting portion 26 at the first predetermined flow rate αNLM that is smaller than the flow rate for the warm-up operation or the stable operation and the oxidant gas is supplied to the first combusting portion 26 at the second predetermined flow rate γNLM that is greater than the flow rate for the warm-up operation or the stable operation. Thus, during the stop operation of the fuel cell system, the determination of whether the second combusting portion 28 is normal or not may be performed without an addition of a specific process.

Further, the determination portion (step 108 to step 112) determination process in a case where the temperature of the reforming portion 23 is equal to or greater than a reforming reaction activating temperature of a catalyst at the reforming portion 23. When the temperature of the reforming portion 23 is equal to or greater than the reforming reaction activating temperature, a great amount of hydrogen is generated from the source material. Thus, hydrogen content in gas (fuel, i.e., hydrogen-rich gas) supplied to the fuel cell 24 and further to the second combusting portion 28 increases. Because hydrogen includes better ignitability and combustibility than the source material, steady burning of hydrogen at the second combusting portion 28 may lead to the accurate determination of whether or not the second combusting portion 28 is normal.

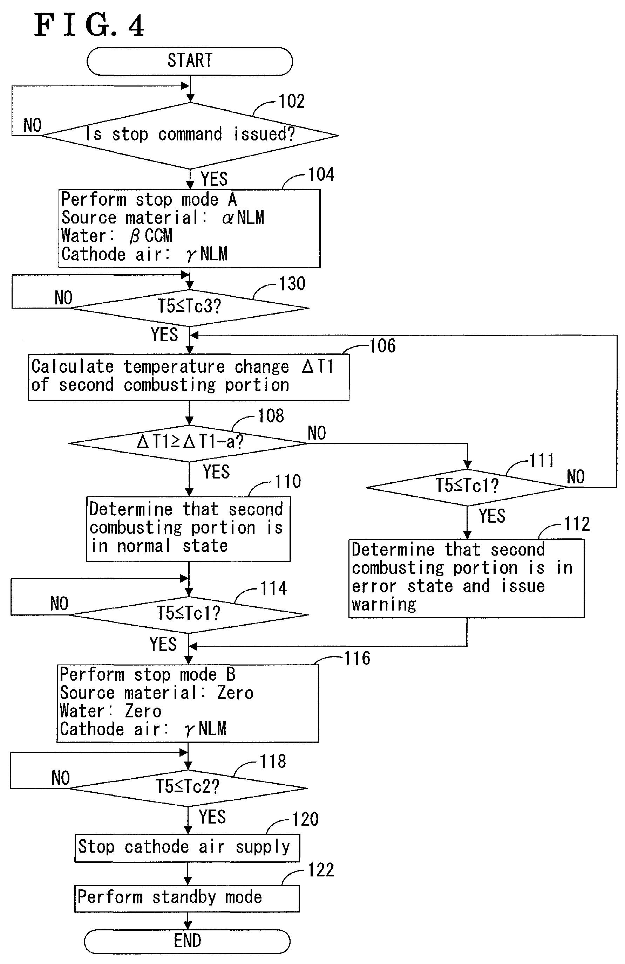

Next, a modified example of the control during the stop operation of the fuel cell system will be explained with reference to Fig. 4. Differences of the present control in Fig. 4 from the aforementioned control illustrated in Fig. 3 are as follows. According to the control in Fig. 3, whether the second combusting portion 28 is in the normal state or the error state is constantly determined until the fuel cell temperature T5 becomes equal to or smaller than the first predetermined temperature Tc1 after the stop mode A is started. Thus, when the stop mode A is started, whether the second combusting portion 28 is normal or not is constantly determined so as to promptly detect the error state of the second combusting portion 28.

On the other hand, according to the modified example illustrated in Fig. 4, whether the second combusting portion 28 is in the normal state or the error state is not determined until the fuel cell temperature T5 becomes equal to or smaller than the third predetermined temperature Tc3. That is, the determination of the second combusting portion 28 is initiated when or after the fuel cell temperature T5 becomes equal to or smaller than the third predetermined temperature Tc3. The control device 60 determines YES in step 130 in a case where the fuel cell temperature T5 turns to be the third predetermined temperature Tc3 after the stop mode A is started in step 104. Then, the determination of the second combusting portion 28 is performed in step 106 to step 114. The stop operation is thereafter shifted to the stop mode B in step 116.

The third predetermined temperature Tc3 is specified so as to restrain the oxidation within the fuel cell 24. At this time, in a case where the third predetermined temperature Tc3 is specified to be excessively small, the temperature of the reforming portion 23 also decreases to thereby inhibit the reforming reaction. As a result, H₂ is not generated and CH₄ that is unburnt is only obtained, which may inhibit the combustion at the combustion catalyst and lead to a possible wrong detection. The fuel cell temperature T5 is equal to or smaller than the third predetermined temperature Tc3 so that the first combusting portion 26 is restrained from being naturally reignited after the combustion of the first combusting portion 26 is stopped. The wrong determination caused by the reignition of the first combusting portion 26 may be securely restrained.

According to the aforementioned modified example, the temperature change ΔT1 is calculated at a time when the fuel cell temperature T5 becomes equal to or smaller than the third predetermined temperature Tc3 and thereafter the calculated temperature change ΔT1 is compared with the predetermined value ΔT1-a. Alternatively, the temperature change ΔT1 of the second combusting portion 28 may be calculated before the fuel cell temperature T5 becomes equal to or smaller than the third predetermined temperature Tc3. The calculation result of the temperature change ΔT1 is stored to be compared with the predetermined value ΔT1-a after the fuel cell temperature T5 becomes equal to or smaller than the third predetermined temperature Tc3.

According to the aforementioned modified example, the determination portion (step 108 to step 112) performs the determination process after the fuel cell temperature T5 becomes equal to or smaller than the third predetermined temperature Tc3. Thus, the reignition of the first combusting portion 26 in the stop operation regardless of extinguishing of the first combusting portion 26, i.e., even after extinguishing, is securely restrained. Whether the second combusting portion 28 is in the normal state or the error state may be securely determined. The determination process may be performed after an elapse of a predetermined time, for example, a predetermined time tm-e serving as a first predetermined time which will be explained later, from a point at which the stop mode A is started.

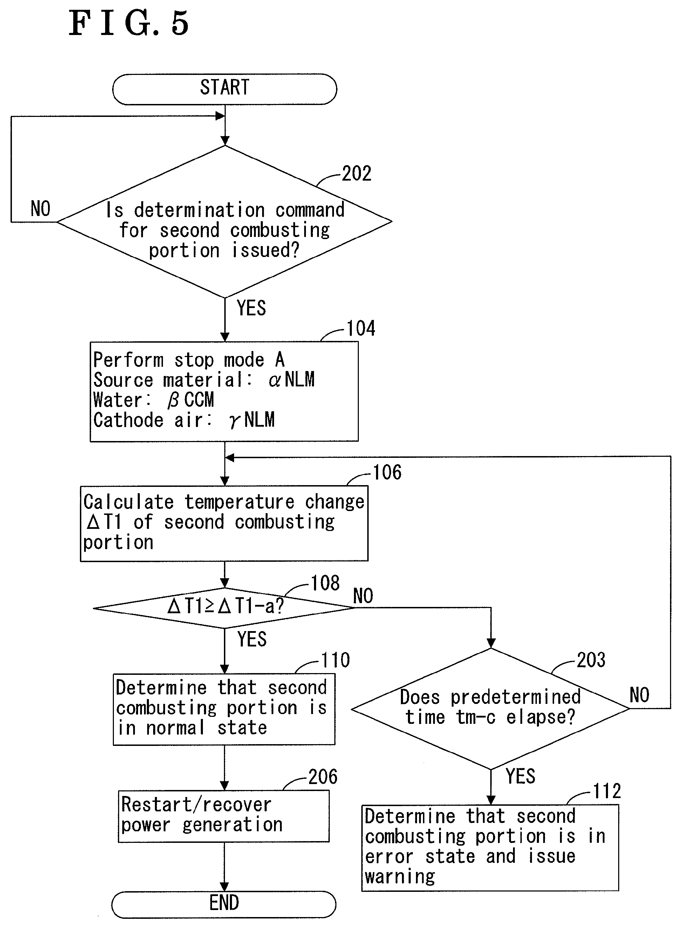

Next, a case where the determination of the second combusting portion 28 is forcedly performed while the fuel cell system is in a start-up operation (i.e., the warm-up operation) or in the stable operation will be explained with reference to Fig. 5. In this case, instead of the procedure in step 111 illustrated in Figs. 3 and 4, a procedure in step 203 is performed. In step 203, it is determined whether or not a predetermined time tm-c elapses from a point at which a determination command, i.e., a start command for staring the determination process, is issued. The predetermined time tm-c may be specified so that the fuel cell temperature T5 substantially turns to the first predetermined temperature Tc1 by the stop mode A after the elapse of the predetermined time tm-c.

In a case where a command to determine the second combusting portion 28 (determination command) is issued in a state where the temperature of the second combusting portion 28 falls within the activating temperature range during the start-up operation or the stable operation of the fuel cell system, the control device 60 determines YES in step 202. Then, the control device 60 performs the stop operation A in step 104 in the same way as the control illustrated in Figs 3 and 4. In step 202, it is determined whether or not the determination command is issued. The determination command is issued at a predetermined time or per predetermined time period.

The control device 60 calculates the temperature change ΔT1 of the second combusting portion 28 in step 106. The control device 60 continues the determination of whether the second combusting portion 28 is in the normal state or in the error state until the elapse of up to the predetermined time tm-c in the stop mode A in step 108 to step 112. That is, the control device 60 determines that the second combusting portion 28 is in the normal state in a case where the temperature change ΔT1 of the second combusting portion 28 becomes equal to or greater than the predetermined value ΔT1-a in step 110. Otherwise the control device 60 determines that the second combusting portion 28 is in the error state in step 112, for example, in a case where a state in which the temperature change ΔT1 is smaller than the predetermined value ΔT1-a continues even when or after the predetermined time tm-c elapses.

The control device 60 proceeds the program to step 206 after determining that the second combusting portion 28 is normal to thereby perform the restart or power generation recovery of the fuel cell system. Accordingly, as long as the second combusting portion 28 is in the normal state, the fuel cell system is restarted without waiting the elapse of the predetermined time tm-c to thereby reduce time for stopping the power generation for the determination of the second combusting portion 28. In addition, the control device 60 issues a warning about the error state of the second combusting portion 28, i.e., alerts the user to the error state of the second combusting portion 28, and stops the fuel cell system after determining the error state of the second combusting portion 28. The restart and the power generation recovery are not performed accordingly. The control device 60 performs the restart and the power generation recovery of the fuel cell system in step 206. That is, the control device 60 supplies the source material, water and cathode air at respective flow rates so as to restart the fuel cell system and performs the power generation to follow a power consumption by a load electric power after the completion of the warming-up.

According to the present embodiment, during the warm-up operation or the stable operation, the source material is supplied to the first combusting portion 26 at the first flow rate αNLM that is smaller than the flow rate for the warm-up operation or the stable operation while the oxidant gas is supplied to the first combusting portion 26 at the second flow rate γNLM that is greater than the flow rate for the warm-up operation or the stable operation in a case where the start command is issued for starting the determination process by the determination portion. Then, while the source material is supplied at the first predetermined flow rate αNLM and the oxidant gas is supplied at the second predetermined flow rate γNLM, the determination portion performs the determination process. Accordingly, even in the warm-up operation or the stable operation, the determination of whether the second combusting portion 28 is in the normal state or the error state may be performed. That is, even in a state where the fuel cell system is in the start-up operation or the stable operation, whether or not the second combusting portion 28 is in the error state may be periodically determined.

According to the aforementioned embodiment, during the warm-up operation or the stable operation of the fuel cell system, the determination portion may perform the determination process after the fuel cell temperature T5 becomes equal to or smaller than a predetermined temperature. Accordingly, the reignition of the first combusting portion 26 even after extinguishing is securely restrained during the warm-up operation or the stable operation. The determination of whether the second combusting portion 28 is in the normal state or the error state may be accurately performed.

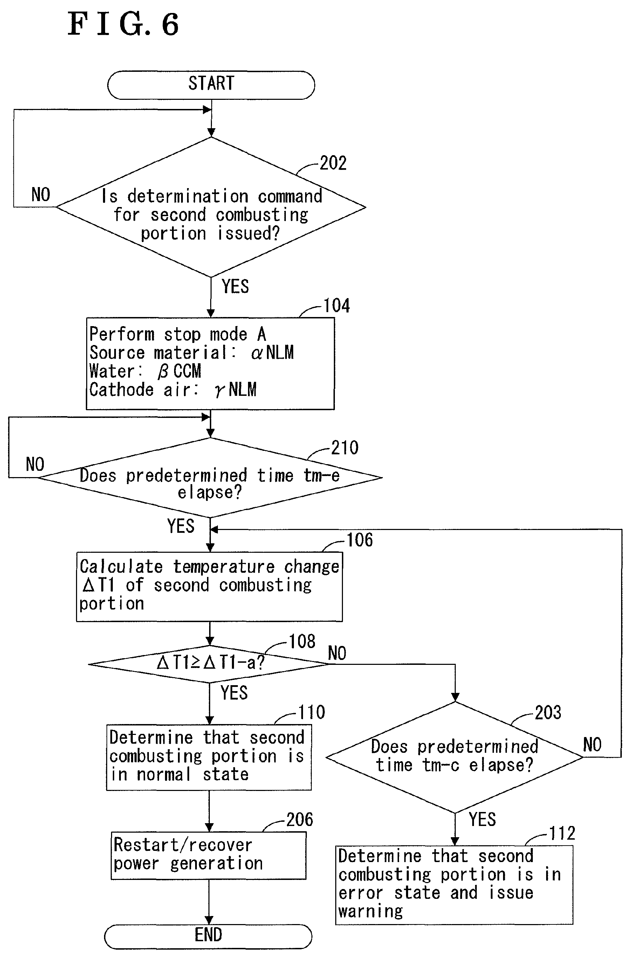

A modified example of the control during the start-up operation or the stable operation will be explained with reference to Fig. 6. A difference of the present control from the aforementioned control illustrated in Fig. 5 is as follows. According to the control illustrated in Fig. 5, the determination of the second combusting portion 28 is constantly performed until the predetermined time tm-c elapses after the start of the stop mode A. As a result, once the stop mode A is started, the determination of the second combusting portion 28 is constantly performed to thereby promptly detect whether or not the malfunction occurs at the second combusting portion 28.

On the other hand, according to the modified example illustrated in Fig. 6, the determination of the second combusting portion 28 is not performed until the predetermined time tm-e that is shorter than the predetermined time tm-c elapses. After the elapse of the predetermined time tm-e, the determination of whether the second combusting portion 28 is in the normal state or the error state is initiated. Specifically, the control device 60 determines YES in step 210 when the second predetermined time tm-e elapses after the start of the stop mode A in step 104. Thereafter the determination of the second combusting portion 28 is performed in step 106 to step 203. The predetermined time tm-e is specified so that the fuel cell temperature T5 substantially turns to the third predetermined temperature Tc3 by the stop mode A after the elapse of the predetermined time tm-e. Accordingly, because the fuel cell temperature T5 is equal to or smaller than the third predetermined temperature Tc3 after the elapse of the predetermined time tm-e, the first combusting portion 26 is restrained from being naturally ignited after the combustion of the first combusting portion 26 is stopped. The wrong determination of the second combusting portion 28 caused by the reignition of the first combusting portion 26 may be securely restrained.

According to the aforementioned embodiment, the calculation of the temperature change ΔT1 of the second combusting portion 28 is initiated after the elapse of the predetermined time tm-e and then the calculated temperature change ΔT1 is compared with the predetermined value ΔT1-a. Alternatively, before the elapse of the predetermined time tm-e, the temperature change ΔT1 of the second combusting portion 28 is calculated and stored, and, after the elapse of the predetermined time tm-e, compared with the predetermined value ΔT1-a.

According to the aforementioned embodiment, the determination portion performs the determination process after the elapse of the predetermined time tm-e from a point at which the supply of the source material at the first predetermined flow rate αNLM and the supply of the oxidant gas at the second predetermined flow rate γNLM to the first combusting portion 26 are started. Accordingly, during the warm-up operation or the stable operation, the reignition of the first combusting portion 26 even after extinguishing may be securely restrained, which leads to the accurate determination of whether the second combusting portion 28 is in the normal state or the error state.

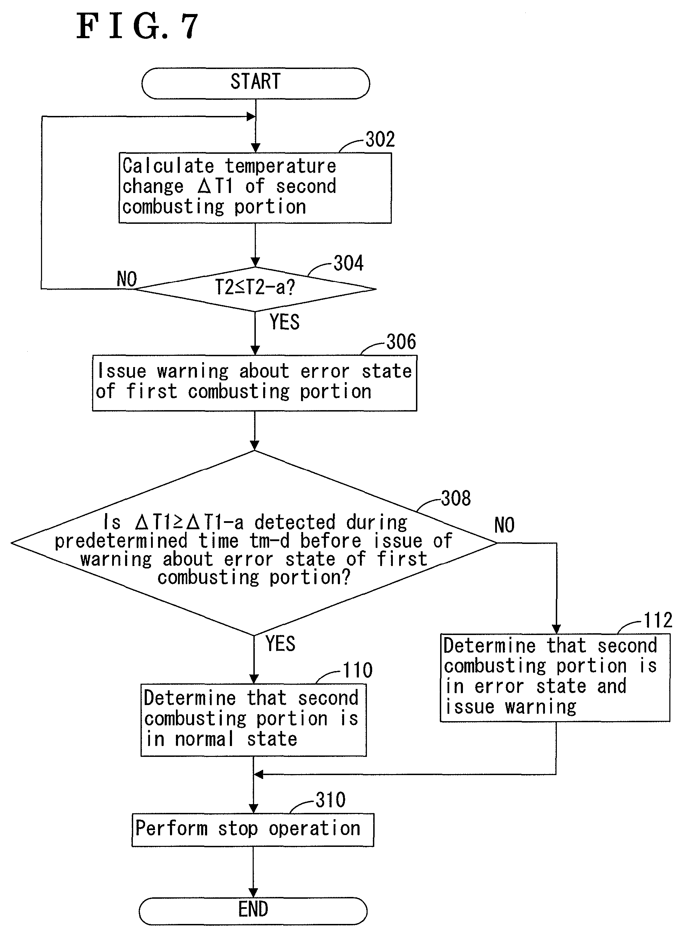

Next, a case where the determination of the second combusting portion 28 is performed when the combustion of the first combusting portion 26 is extinguished (i.e., flame blow-off of the first combusting portion 26) in the start-up operation or the stable operation will be explained with reference to Fig. 7.

The control device 60 serving as a blow-off determination portion calculates the temperature change ΔT1 of the second combusting portion 28 per unit time in step 302 in the same way as the procedure in step 106. The control device 60 then determines whether or not the blow-off of the first combusting portion 26 occurs (i.e., whether the combustion of the first combusting portion 26 is extinguished or not) in step 304 serving as the blow-off determination portion. Specifically, the control device 60 determines the blow-off of the first combusting portion 26 in a case where a temperature T2 of the first combusting portion 26 detected by the temperature sensor 26b1 and/or the temperature sensor 26b2 is equal to or smaller than a predetermined temperature T2-a. On the other hand, in a case where the temperature T2 of the first combusting portion 26 is greater than the predetermined temperature T2-a, the control device 60 determines that the blow-off of the first combusting portion 26 does not occur, i.e., the first combusting portion 26 is in the combustion state.

In a case where the blow-off of the first combusting portion 26 does not occur, the control device 60 determines NO in step 304 and returns the program to step 302 so as to continue the start-up operation or the stable operation. On the other hand, in a case where the blow-off of the first combusting portion 26 occurs, the control device 60 determines YES in step 304 and proceeds the program to step 306 so as to issue a warning about the error state of the first combusting portion 26, i.e., the blow-off of the first combusting portion 26.

The control device 60 determines, during a time period to the actual stop of the fuel cell system in step 310 after the detection of the blow-off of the first combusting portion 26, whether or not the second combusting portion 28 is in the normal state. Specifically, the control device 60 determines whether or not the temperature change ΔT1 of the second combusting portion 28 is equal to or greater than the predetermined value ΔT1-a during a predetermined time tm-d serving as a second predetermined time before the determination of the blow-off of the first combusting portion 26, i.e., before a point at which the error state of the first combusting portion 26 is detected and determined by the blow-off determination portion. At this time, because the stop operation of the fuel cell system is not performed, the source material, air, and cathode are supplied at respective flow rates depending on the start-up operation or the stable operation while the first combusting portion 26 is not burnt. The predetermined time tm-d is specified to be shorter than a time period from the actual blow-off of the first combusting portion 26 to the detection (determination) of the blow-off thereof.

The control device 60 determines YES in step 308 in a case where the temperature change ΔT1 of the second combusting portion 28 is equal to or greater than the predetermined value ΔT1-a and determines the normal state of the second combusting portion 28 in step 110. On the other hand, in a case where the temperature change ΔT1 of the second combusting portion 28 is smaller than the predetermined value ΔT1-a, the control device 60 determines NO in step 308 and determines the error state of the second combusting portion 28 to thereby issue a warning about the error state in step 112. The control device 60 performs the stop operation of the fuel cell system in step 310.

In the aforementioned procedure in step 304, the temperature T2 of the first combusting portion 26 is compared with the predetermined temperature T2-a to determine the error state of the first combusting portion 26. Alternatively, a reduction ΔT2 of the temperature T2 of the first combusting portion 26 may be compared with a predetermined value ΔT2-a to determine the error state of the first combusting portion 26. Further alternatively, a flame rod or an ultraviolet light detection, for example, may be applied to detect the combustion condition of the first combusting portion 26.

According to the aforementioned embodiment, the blow-off determination portion (step 304) is further provided for determining whether or not the blow-off of the first combusting portion 26 occurs on a basis of the temperature T2 of the first combusting portion 26. In a case where the blow-off determination portion determines the occurrence of blow-off of the first combusting portion 26, the determination portion (step 308, step 110, step 112) performs the determination process based on the temperature change of the second combusting portion 28 during the predetermined time tm-d before the determination of the blow-off of the first combusting portion 26. Accordingly, even when the blow-off of the first combusting portion 26 occurs, the determination of whether the second combusting portion 28 is in the normal state or the error state may be promptly performed without spending time after the blow-off of the first combusting portion 26.

According to the aforementioned embodiment, the fuel cell is a solid oxide fuel cell (SOFC). Alternatively, the fuel cell may be a polymer electrolyte fuel cell (PEFC), for example, for the fuel cell system.

## Claims

1. A fuel cell system comprising:
a fuel cell (24) generating an electric power by a fuel and an oxidant gas;
a reforming portion (23) generating the fuel by a source material and water to supply the fuel to the fuel cell (24);
a first combusting portion (26) receiving a combustible gas including an unused fuel from the fuel cell (24) to burn the combustible gas by an oxidant gas and sending out a combustion gas;
a second combusting portion (28) receiving an unused combustible gas discharged from the first combusting portion (26) to burn the unused combustible gas and sending out a combustion gas; and
a determination portion (60,108-112) performing a determination process in which the determination portion (60,108-112) determines that the second combusting portion (28) is in a normal state in a case where a temperature change (ΔT1) of the second combusting portion (28) is equal to or greater than a predetermined value (ΔT1-a) in a state where the first combusting portion (26) is inhibited from being burnt while being provided with the combustible gas and the oxidant gas, the determination portion (60,108-112) determining that the second combusting portion (28) is in an error state in a case where the temperature change (ΔT1) of the second combusting portion (28) is smaller than the predetermined value (ΔT1-a) in a state where the first combusting portion (26) is inhibited from being burnt while being provided with the combustible gas and the oxidant gas,
wherein during a stop operation of the fuel cell system the determination portion (60,108-112) performs the determination process in a state where the source material is supplied to the first combusting portion (26) at a first predetermined flow rate (αNLM) that is smaller than a flow rate for each of a warm-up operation and a stable operation of the fuel cell system, and the oxidant gas is supplied to the first combusting portion (26) at a second predetermined flow rate (γNLM) that is greater than a flow rate for each of the warm-up operation and the stable operation.

2. The fuel cell system according to Claim 1, wherein the second combusting portion (28) includes a combustion catalyst burning the combustible gas.

3. The fuel cell system according to either Claim 1 or 2, wherein the determination portion (60,108-112) performs the determination process after a temperature (T5) of the fuel cell (24) becomes equal to or smaller than a predetermined temperature (Tc3).

4. The fuel cell system according to either Claim 1 or 2, wherein during each of a warm-up operation and a stable operation of the fuel cell system the source material is supplied to the first combusting portion (26) at a first predetermined flow rate (αNLM) that is smaller than a flow rate for each of the warm-up operation and the stable operation of the fuel cell system, and the oxidant gas is supplied to the first combusting portion (26) at a second predetermined flow rate (γNLM) that is greater than a flow rate for each of the warm-up operation and the stable operation in a case where a start command is issued for starting the determination process by the determination portion (60,108-112), and the determination portion (60,108-112) performs the determination process in a state where the source material is supplied to the first combusting portion (60,108-112) at the first predetermined flow rate (αNLM) while the oxidant gas is supplied to the first combusting portion (26) at the second predetermined flow rate (γNLM).

5. The fuel cell system according to Claim 4, wherein the determination portion (60,108-112) performs the determination process after an elapse of a first predetermined time (tm-e) from a start of a supply of each of the source material at the first predetermined flow rate (αNLM) and the oxidant gas at the second predetermined flow rate (γNLM) to the first combusting portion (26).

6. The fuel cell system according to Claim 4, wherein the determination portion (60,108-112) performs the determination process after a temperature (T5) of the fuel cell (24) becomes equal to or smaller than a predetermined temperature.

7. The fuel cell system according to either Claim 1 or 2, further comprising a blow-off determination portion (60, 304) determining whether or not the combustion of the first combusting portion (26) is extinguished on a basis of a temperature (T2) of the first combusting portion (26), wherein in a case where the blow-off determination portion determines an occurrence of the extinction of combustion of the first combusting portion (26), the determination portion (60,108-112, 308) performs the determination process based on the temperature change (ΔT1) of the second combusting portion (28) during a second predetermined time (tm-d) before the determination of the extinction of combustion of the first combusting portion (26) by the blow-off determination portion.

8. The fuel cell system according to any one of Claims 1 through 7, wherein the determination portion (60,108-112) performs the determination process in a case where a temperature of the reforming portion (23) is equal to or greater than a reforming reaction activating temperature.

## Patentansprüche

1. Brennstoffzellensystem mit:
einer Brennstoffzelle (24), die durch einen Brennstoff und ein Oxidationsmittelgas einen elektrischen Strom erzeugt;
einem Reformierabschnitt (23), der den Brennstoff durch ein Ausgangsmaterial und Wasser erzeugt, um den Brennstoff der Brennstoffzelle (24) zuzuführen;
einem ersten Verbrennungsabschnitt (26), der ein brennbares Gas aufnimmt, das einen ungenutzten Brennstoff von der Brennstoffzelle (24) einschließt, um das brennbare Gas durch ein Oxidationsmittelgas zu verbrennen und ein Verbrennungsgas hinauszuschicken;
einem zweiten Verbrennungsabschnitt (28), der ein ungenutztes brennbares Gas aufnimmt, das vom ersten Verbrennungsabschnitt (26) abgegeben wird, um das ungenutzte brennbare Gas zu verbrennen und ein Verbrennungsgas hinauszuschicken; und
einem Feststellungsabschnitt (60,108-112), der einen Feststellungsvorgang durchführt, in dem der Feststellungsabschnitt (60,108-112) in einem Fall, in dem eine Temperaturänderung (ΔT1) des zweiten Verbrennungsabschnitts (28) in einem Zustand, in dem der erste Verbrennungsabschnitt (26) am Verbrennen gehindert ist, während er mit dem brennbaren Gas und dem Oxidationsmittelgas versorgt wird, größer oder gleich einem vorbestimmten Wert (ΔT1-a) ist, feststellt, dass sich der zweite Verbrennungsabschnitt (28) in einem normalen Zustand befindet, wobei der Feststellungsabschnitt (60,108-112) in einem Fall, in dem die Temperaturänderung (ΔT1) des zweiten Verbrennungsabschnitts (28) in einem Zustand, in dem der erste Verbrennungsabschnitt (26) am Verbrennen gehindert ist, während er mit dem brennbaren Gas und dem Oxidationsmittelgas versorgt wird, kleiner als der vorbestimmte Wert (ΔT1-a) ist, feststellt, dass sich der zweite Verbrennungsabschnitt (28) in einem Fehlerzustand befindet,
wobei der Feststellungsabschnitt (60,108-112) während eines Stoppbetriebs des Brennstoffzellensystems den Feststellungsvorgang in einem Zustand durchführt, in dem das Ausgangsmaterial dem ersten Verbrennungsabschnitt (26) mit einer ersten vorbestimmten Durchflussrate (αNLM) zugeführt wird, die kleiner als eine Durchflussrate für jeweils einen Aufwärmbetrieb und einen stabilen Betrieb des Brennstoffzellensystems ist, und das Oxidationsmittelgas dem ersten Verbrennungsabschnitt (26) mit einer zweiten vorbestimmten Durchflussrate (γNLM) zugeführt wird, die größer als eine Durchflussrate für jeweils den Aufwärmbetrieb und den stabilen Betrieb ist.

2. Brennstoffzellensystem nach Anspruch 1, wobei der zweite Verbrennungsabschnitt (28) einen Verbrennungskatalysator aufweist, der das brennbare Gas verbrennt.

3. Brennstoffzellensystem nach entweder Anspruch 1 oder 2, wobei der Feststellungsabschnitt (60,108-112) den Feststellungsvorgang durchführt, nachdem eine Temperatur (T5) der Brennstoffzelle (24) kleiner oder gleich einer vorbestimmten Temperatur (Tc3) geworden ist.

4. Brennstoffzellensystem nach entweder Anspruch 1 oder 2, wobei während jeweils eines Aufwärmbetriebs und eines stabilen Betriebs des Brennstoffzellensystems in einem Fall, in dem ein Startbefehl zum Starten des Feststellungsvorgangs durch den Feststellungsabschnitt (60,108-112) abgegeben wird, das Ausgangsmaterial dem ersten Verbrennungsabschnitt (26) mit einer ersten vorbestimmten Durchflussrate (αNLM) zugeführt wird, die kleiner als eine Durchflussrate für jeweils den Aufwärmbetrieb und den stabilen Betrieb des Brennstoffzellensystems ist, und das Oxidationsmittelgas dem ersten Verbrennungsabschnitt (26) mit einer zweiten vorbestimmten Durchflussrate (γNLM) zugeführt wird, die größer als eine Durchflussrate für jeweils den Aufwärmbetrieb und den stabilen Betrieb ist, und der Feststellungsabschnitt (60,108-112) den Feststellungsvorgang in einem Zustand durchführt, in dem das Ausgangsmaterial dem ersten Verbrennungsabschnitt (60,108-112) mit der ersten vorbestimmten Durchflussrate (αNLM) zugeführt wird, während das Oxidationsgas dem ersten Verbrennungsabschnitt (26) mit der zweiten vorbestimmten Durchflussrate (γNLM) zugeführt wird.

5. Brennstoffzellensystem nach Anspruch 4, wobei der Feststellungsabschnitt (60,108-112) den Feststellungsvorgang nach einem Verstreichen einer ersten vorbestimmten Zeit (tm-e) von einem Start einer Zufuhr von jeweils dem Ausgangsmaterial mit der ersten vorbestimmten Durchflussrate (αNLM) und dem Oxidationsmittelgas mit der zweiten vorbestimmten Durchflussrate (γNLM) zum ersten Verbrennungsabschnitt (26) durchführt.

6. Brennstoffzellensystem nach Anspruch 4, wobei der Feststellungsabschnitt (60,108-112) den Feststellungsvorgang durchführt, nachdem eine Temperatur (T5) der Brennstoffzelle (24) kleiner oder gleich einer vorbestimmten Temperatur geworden ist.

7. Brennstoffzellensystem nach entweder Anspruch 1 oder 2, mit außerdem einem Ausblasfeststellungsabschnitt (60, 304), der auf Grundlage einer Temperatur (T2) des ersten Verbrennungsabschnitts (26) feststellt, ob die Verbrennung des ersten Verbrennungsabschnitts (26) erloschen ist oder nicht, wobei der Feststellungsabschnitt (60,108-112, 308) in einem Fall, in dem der Ausblasfeststellungsabschnitt ein Auftreten des Erlöschens der Verbrennung des ersten Verbrennungsabschnitts (26) feststellt, den Feststellungsvorgang beruhend auf der Temperaturänderung (ΔT1) des zweiten Verbrennungsabschnitts (28) während einer zweiten vorbestimmten Zeit (tm-d) vor der Feststellung des Erlöschens der Verbrennung des ersten Verbrennungsabschnitts (26) durch den Ausblasfeststellungsabschnitt durchführt.

8. Brennstoffzellensystem nach einem der Ansprüche 1 bis 7, wobei der Feststellungsabschnitt (60,108-112) den Feststellungsvorgang in einem Fall durchführt, in dem eine Temperatur des Reformierabschnitts (23) größer oder gleich einer Reformierreaktions-Aktivierungstemperatur ist.

## Revendications

1. Système de pile à combustible comprenant :
une pile à combustible (24) générant une énergie électrique par un combustible et un gaz oxydant ;
une partie de reformage (23) générant le combustible par un matériau de source et de l'eau pour fournir le combustible à la pile à combustible (24) ;
une première partie de combustion (26) recevant un gaz combustible comprenant un combustible inutilisé provenant de la pile à combustible (24) pour brûler le gaz combustible par un gaz oxydant et sortir un gaz de combustion ;
une deuxième partie de combustion (28) recevant un gaz combustible inutilisé déchargé de la première partie de combustion (26) pour brûler le gaz combustible inutilisé et sortir un gaz de combustion ; et
une partie de détermination (60, 108 à 112) effectuant un processus de détermination dans lequel la partie de détermination (60, 108 à 112) détermine que la deuxième partie de combustion (28) est dans un état normal dans un cas où un changement de température (ΔT1) de la deuxième partie de combustion (28) est égal ou supérieur à une valeur prédéterminée (ΔT1-a) dans un état où la première partie de combustion (26) ne peut pas être brûlée tandis qu'elle reçoit le gaz combustible et le gaz oxydant, la partie de détermination (60, 108 à 112) déterminant que la deuxième partie de combustion (28) est dans un état d'erreur dans un cas où le changement de température (ΔT1) de la deuxième partie de combustion (28) est inférieur à la valeur prédéterminée (ΔT1-a) dans un état où la première partie de combustion (26) ne peut pas être brûlée tandis qu'elle reçoit le gaz combustible et le gaz oxydant,
dans lequel, pendant une opération d'arrêt du système de pile à combustible, la partie de détermination (60, 108 à 112) effectue le processus de détermination dans un état où le matériau de source est fourni à la première partie de combustion (26) à un premier débit prédéterminé (αNLM) qui est inférieur à un débit pour chacun d'un fonctionnement de chauffage et d'un fonctionnement stable du système de pile à combustible, et le gaz oxydant est fourni à la première partie de combustion (26) à un deuxième débit prédéterminé (γNLM) qui est supérieur à un débit pour chacun du fonctionnement de chauffage et du fonctionnement stable.

2. Système de pile à combustible selon la revendication 1, dans lequel la deuxième partie de combustion (28) comprend un catalyseur de combustion brûlant le gaz combustible.

3. Système de pile à combustible selon la revendication 1 ou 2, dans lequel la partie de détermination (60, 108 à 112) effectue le processus de détermination après qu'une température (T5) de la pile à combustible (24) est devenue égale ou inférieure à une température prédéterminée (Tc3).

4. Système de pile à combustible selon la revendication 1 ou 2, dans lequel, pendant chacun d'un fonctionnement de chauffage et d'un fonctionnement stable du système de pile à combustible, le matériau de source est fourni à la première partie de combustion (26) à un premier débit prédéterminé (αNLM) qui est inférieur à un débit pour chacun du fonctionnement de chauffage et du fonctionnement stable du système de pile à combustible, et le gaz oxydant est fourni à la première partie de combustion (26) à un deuxième débit prédéterminé (γNLM) qui est supérieur à un débit pour chacun du fonctionnement de chauffage et du fonctionnement stable dans un cas où une commande de début est émise pour débuter le processus de détermination par la partie de détermination (60, 108 à 112), et la partie de détermination (60, 108 à 112) effectue le processus de détermination dans un état où le matériau de source est fourni à la première partie de combustion (60, 108 à 112) au premier débit prédéterminé (αNLM) tandis que le gaz oxydant est fourni à la première partie de combustion (26) au deuxième débit prédéterminé (γNLM).

5. Système de pile à combustible selon la revendication 4, dans lequel la partie de détermination (60, 108 à 112) effectue le processus de détermination après qu'un premier temps prédéterminé (tm-e) s'est écoulé depuis le début d'une fourniture de chacun du matériau de source au premier débit prédéterminé (αNLM) et du gaz oxydant au deuxième débit prédéterminé (γNLM) à la première partie de combustion (26).

6. Système de pile à combustible selon la revendication 4, dans lequel la partie de détermination (60, 108 à 112) effectue le processus de détermination après qu'une température (T5) de la pile à combustible (24) est devenue égale ou inférieure à une température prédéterminée.

7. Système de pile à combustible selon la revendication 1 ou 2, comprenant en outre une partie de détermination d'extinction (60, 304) déterminant si, oui ou non, la combustion de la première partie de combustion (26) est éteinte sur une base d'une température (T2) de la première partie de combustion (26), dans lequel, dans un cas où la partie de détermination d'extinction détermine une apparition de l'extinction de la combustion de la première partie de combustion (26), la partie de détermination (60, 108 à 112, 308) effectue le processus de détermination sur la base du changement de température (ΔT1) de la deuxième partie de combustion (28) pendant un deuxième temps prédéterminé (tm-d) avant la détermination de l'extinction de la combustion de la première partie de combustion (26) par la partie de détermination d'extinction.

8. Système de pile à combustible selon l'une quelconque des revendications 1 à 7, dans lequel la partie de détermination (60, 108 à 112) effectue le processus de détermination dans un cas où une température de la partie de reformage (23) est égale ou supérieure à une température d'activation de réaction de reformage.
